# EUROPÄISCHE PATENTSCHRIFT

(11) **EP 3 454 021 B1**
(45) Veröffentlichungstag und Bekanntmachung des Hinweises auf die Patenterteilung: **21.10.2020**
(21) Anmeldenummer: 17190540.9
(22) Anmeldetag: 12.09.2017
(51) Int. Cl.: G01F 15/18, G01F 15/14, F16L 29/00, G01F 5/00, E03B 7/07, G01F 15/00

(54) **ANSCHLUSSFORMSTÜCK**
CONNECTION PIECE
RACCORD

(43) Veröffentlichungstag der Anmeldung: 13.03.2019
(73) Patentinhaber: Kqiku, Nysret, 8305 Dietlikon (CH)
(72) Erfinder: Kqiku, Nysret, 8305 Dietlikon (CH)
(74) Vertreter: Schaad, Balass, Menzl & Partner AG

(56) Entgegenhaltungen:
- DE-U1- 20 107 038
- US-A1- 2017 145 668
- US-B1- 6 601 604

## Beschreibung

Die Erfindung betrifft ein Anschlussformstück als Teil eines sanitären Vorwandsystems gemäss dem Oberbegriff des Anspruchs 1 und eine Anschlussvorrichtung gemäss Anspruch 12.

Unter dem Begriff "Vorwandsystem" versteht der Fachmann im Sanitärbereich allgemein die Installation von Bauteilen auf bzw. vor einer Gebäudewand. Die Wasserzuleitungen und Abwasserrohre werden dabei auf der Wand montiert und anschließend im Trockenbau meist mit Gipskarton verkleidet. Dadurch bleiben die Wasserleitungselemente für den Nutzer weitgehend unsichtbar. Für Waschbecken und WC gibt es mitunter spezielle Montageelemente, die an Boden und Wand befestigt werden. Beim WC enthält dieses den Spülkasten. Diese Art der Installation ist heute in vielen Badezimmern anzutreffen, da die Rohre dadurch akustisch von der Wand entkoppelt sind und die Wand im Gegensatz Rohrverlegung unter Putz (Inwandinstallation) nicht geschlitzt werden muss.

Die vorliegende Erfindung betrifft insbesondere ein Anschlussformstück als Teil eines Vorwandsystems, wobei das Anschlussformstück neben Wasserleitungselementen (Rohr- bzw. Kanalabschnitten) auch einen Gehäuseteil für die Aufnahme eines darin eingesetzten Wasserzählers (z.B. Durchflusszähler für Wasser - auch "Wasseruhr" genannt) umfasst. Ferner können Absperrelemente (z.B. Absperrventile) vorhanden sein, die dem Wasserzähler in Strömungsrichtung des Wassers vor- und/oder nachgeordnet sind.

Ein Wasserzähler besteht üblicherweise aus einem Zählergehäuse mit einem darin lösbar einsetzbaren Messeinsatz und erlaubt die Bestimmung einer durch eine Wasserleitung durchfliessenden Wassermenge. Heutzutage werden in der Regel für Warm- und Kaltwasser getrennte Wasserzähler eingesetzt, um neben dem Wasserverbrauch auch die von einer jeweiligen Wohneinheit verbrauchten Energiemenge für Warmwasser zu ermöglichen. Die Wasserzähler werden dabei üblicherweise nebeneinander im Abstand zu einer Gebäudewand angeordnet und fixiert.US 6 601 604 B1 offenbart ein Ventilsystem für den Einsatz in Feuerlöschsystemen, das Druckentlastung, Druckprüfung und Durchflussmöglichkeit von Drainage- und Testflüssigkeiten ermöglicht.

US 2017/0145668 A1 offenbart eine Vorrichtung und ein Verfahren zum Bereitstellen einer Vielzahl von gemessenen Versorgungsleitungen für ein Hausversorgungssystem.

DE 201 07 038 U1 offenbart eine Vorrichtung für die Zuleitung von Wasser bei Wasserinstallationen, insbesondere für die Wasserverteilung in Wohnungen, Häusern und dergleichen.

Aus der DE 298 15 679 U1 ist etwa eine Unterputzarmatur bekannt, die eine Wasserzählereinheit und ein Absperrventil aufweist. Das Gehäuse für das Absperrventil und das Gehäuse für die Aufnahme der Wasserzählereinheit sind einstückig ausgebildet, wodurch die Herstellung und die Montage vereinfacht werden soll.

In der EP-B1-0853753 ist ein Montagebaustein für die Sanitärinstallation und Verfahren zur Herstellung desselben offenbart. Der Montagebaustein umfasst zwei Leitungsabschnitte mit je einer Absperrarmatur und einem Zählerunterteil, die mit Hilfe des Montagebausteins auf einfache Weise montierbar sind.

Je nach Art der Sanitärinstallation sind die für die Vorwandmontage der wasserführenden Leitungselemente vorhandenen Platzverhältnisse relativ beschränkt. Insbesondere im Falle von Waschbeckenunterbauten steht für Vorbausysteme nur wenig Platz zur Verfügung, was insbesondere bei einstückigen Installationsteilen, die eine vormontierte Baueinheit mit einer vordefinierten Länge bilden, problematisch sein kann.

Aufgabe der vorliegenden Erfindung ist es daher, ein Anschlussformstück für die Aufnahme eines Wasserzählers als Teil eines sanitären Vorwandsystems zur Verfügung zu stellen, das kostengünstig hergestellt werden kann und eine zeitsparende Installation mit Anpassung an die jeweiligen räumlichen Gegebenheiten erlaubt.

Diese Aufgabe wird gelöst durch das Anschlussformstück gemäss Anspruch 1 sowie die Anschlussvorrichtung gemäss Anspruch 12. Bevorzugte Ausführungsformen der Erfindung sind Gegenstand der abhängigen Ansprüche.

Das erfindungsgemässe Anschlussformstück ist als Teil eines sanitären Vorwandsystems vorgesehen, wobei es selbstverständlich auch für eine Unterputz-Installation verwendet werden kann. Es weist konkret folgende Komponenten auf:
einen eine Einlassseite des Anschlussformstücks definierenden Einlassanschluss, durch welchen Wasser einem eine Flussrichtung definierenden Zuflusskanal zuführbar ist,
einen in Flussrichtung gesehen dem Zuflusskanal nachgeordneten Abflusskanal mit einem eine Auslassseite des Anschlussformstücks definierenden, ersten Auslassanschluss, durch welchen Wasser abführbar ist,
einen vorzugsweise zur Frontseite hin offenen Gehäuseteil zur Aufnahme eines eine Frontseite und eine Rückseite definierenden Wasserzählers, wobei der Gehäuseteil einlassseitig über eine Wassereinlassöffnung mit dem Zuflusskanal und auslassseitig über eine Wasserauslassöffnung mit dem Abflusskanal verbunden ist; und
einen einerseits mit einem zweiten Auslassanschluss und andererseits mit der Wasserauslassöffnung des Gehäuseteils verbundenen Bypasskanal.

Gemäss der vorliegenden Erfindung sind zumindest der Zuflusskanal, der Abflusskanal, der Gehäuseteil sowie der Bypasskanal als einstückiges, integrales Bauteil ausgebildet.

Nach Installation des Anschlussformstücks kann Wasser durch die Wassereinlassöffnung und durch den Wasserzähler geleitet und über die Wasserauslassöffnung nach Durchfluss durch den Wasserzähler wieder abgegeben werden. Der Zuflusskanal und der Abflusskanal sind insofern in der Regel in Flussrichtung gesehen, vorzugsweise wenigstens annähernd geradlinig, hintereinander angeordnet. Mittels des Wasserzählers, wie beispielsweise eines Flügelradwasserzählers, Wirbelzähler-, Induktions-, Coriolis- oder Ultraschalldurchflussmessers, kann so die durchströmende Wassermenge bestimmt werden. Das Anschlussformstück wird bevorzugt derart in ein Wasserleitungssystem angeschlossen, dass das Wasser in einer vertikalen Flussrichtung von oben (einlassseitig) nach unten (auslassseitig) durch den Wasserzähler fliesst.

Die Auslassseite befindet sich insofern bevorzugt auf der der Einlassseite abgewandten Seite des Formstücks.

Dank des Bypasskanals kann das vom Wasserzähler austretende Wasser über zwei Wege weitergeleitet werden, nämlich durch den Abflusskanal und/oder den Bypasskanal. Dadurch ist man bei der Installation des Anschlussformstücks flexibler in Bezug auf die am Installationsort vorliegenden Platzverhältnisse, etwa bei beschränktem Unterbauplatz unterhalb von Waschtischen, worauf weiter unten im Zusammenhang mit den bevorzugten Ausführungsformen noch spezifischer eingegangen werden wird.

Dadurch dass das Anschlussformstück einstückig ausgebildet ist, wird die Herstellung und Montage deutlich erleichtert. Es sind so weniger Einzelteile zu fertigen und zu montieren. Insbesondere kann das Anschlussformstück im Werk vorgefertigt und als Ganzes zum Installationsort transportiert werden. Es werden ferner keine Dichtungen zwischen Zuflusskanal, Abflusskanal, Gehäuseteil sowie Bypasskanal benötigt, wodurch die Materialkosten gesenkt und die Lebensdauer erhöht werden können. Als einstückiges Bauteil ist das Anschlussformstück ausserdem als kompakte Einheit direkt in ein Wasserleitungssystem einsetzbar. Vorzugsweise kann es als Ganzes zwischen zwei in Verlängerung zueinander aber beabstandet vorgesehene Wasserleitungsstücke von zu- und abgehenden Wasserleitungen eingesetzt und via Einlassanschluss und ersten Auslassanschluss über an sich bekannte Massnahmen wie Flanschverbindung, Verschweissen oder Verschrauben an das Wasserleitungssystem bzw. an Verbrauchereinrichtungen angeschlossen werden. Der Arbeitsaufwand am Montageort kann damit wesentlich reduziert werden.

Bevorzugt sind der Einlassanschluss sowie der erste und zweite Auslassanschluss als Anfang des Zuflusskanals beziehungsweise als Ende des Abflusskanals und Bypasskanals ausgebildet.

Die Ein- und Auslassanschlüsse weisen bevorzugt einen für Armaturen gängigen Durchmesser auf, vorzugsweise 1/2 oder 3/8 Zoll. So kann der erste und/oder zweite Auslassanschluss beispielsweise mit einem Eckventil für den Anschluss eines Wasserhahns verbunden werden. Solche Eckventile sind dem Fachmann wohlbekannt.

Besonders bevorzugt ist das Bauteil formstabil und im Spritz- oder Formguss hergestellt. Das Bauteil besteht bevorzugt aus Rotguss, d.h. aus einem Gusswerkstoff aus einer Kupfer-Zink-Zinn-Legierung (Cu-Zn-Sn). "Rotguss" ist eine in Fachkreisen gängige Handelsbezeichnung und umfasst in der Regel Kupfer als Hauptbestandteil sowie 1.5% - 11% Zinn und 1% - 9% Zink. Daneben kann auch Blei und Nickel enthalten sein. Rotguss ist für eine Herstellung des Anschlussformstücks mittels Form- oder Spritzguss besonders vorteilhaft. Ferner hat es auch gute Gleit- und Notlaufeigenschaften und ist relativ verschleissfest sowie kavitationsbeständig. Im Hinblick auf eine Verwendung in trinkwasserleitenden Systemen wird das Anschlussformstück bevorzugt aus Rotguss mit weniger als 2% Blei- und/oder Nickelanteil, bevorzugter mit weniger als 0.2% Nickel und weniger als 2% Bleianteil hergestellt. Besonders bevorzugt wird ein Rotgussmaterial verwendet, das blei- und nickelfrei ist.

Die formstabile Ausgestaltung erhöht die Stabilität des Bauteils und erleichtert den Einbau sowie den Transport. Die Herstellung im Spritzguss erlaubt eine präzise und kostengünstige Herstellung des Anschlussformstücks.

Alternativ zu Metall ist auch eine Herstellung aus einem Kunststoffmaterial möglich. Neben dem geringeren Gewicht hat die Verwendung von Kunststoff im Gegensatz zu metallischen Gehäuseteilen den Vorteil, dass eine Wärmeleitung durch die Gehäusewand hindurch wesentlich reduziert wird. Es ist eine Vielzahl von spritzbaren Kunststoffen bekannt, die sich für den vorstehend beschriebenen Einsatzzweck eignen. Ein bevorzugter Kunststoff zur Herstellung des Anschlussformstücks ist etwa Acrylnitril-Butadien-Styrol (ABS) nach DIN 16890 oder Polypropylen nach DIN 8078 oder Polyethylen hoher Dichte (PE-HD) nach DIN 8075 und DIN 19535. Diese Stoffe zeichnen sich mitunter dadurch aus, dass ein daraus gespritztes Anschlussformstück der Brandschutznorm 4102 Klasse B2 entspricht und als selbstverlöschend gilt.

Der Bypasskanal ist, wie eingangs erwähnt, mit der Wasserauslassöffnung des Gehäuseteils verbunden. Unter "verbunden" ist im Sinne der vorliegenden Anmeldung allerdings nicht zwingend "direkt verbunden" bzw. "unmittelbar verbunden" zu verstehen. Der Bypasskanal kann insofern entweder direkt mit der Wasserauslassöffnung verbunden sein, an einer anderen Stelle am Gehäuseteil abzweigen oder vom Abflusskanal abzweigen. Bevorzugt zweigt der Bypasskanal vom Abflusskanal ab.

Der Bypasskanal kann ferner entweder selbsttragend ausgebildet oder mit einer anderen Komponente des Anschlussformstücks, etwa dem Auslasskanal und/oder dem Gehäuseteil, beispielsweise über Stege oder eine Verbindungswand, verbunden sein.

Erfindungsgemäss verläuft der Bypasskanal in Richtung zum Einlassanschluss am Gehäuseteil vorbei. Damit ist der zweite

Auslassanschluss einlassseitig des Gehäuseteils angeordnet. Der Bypasskanal ist mit dem Gehäuseteil verbunden, nämlich indem eine den Bypasskanal begrenzende Kanalwand entweder zumindest abschnittweise mit dem Gehäuseteil gemeinsam ist oder über eine Verbindungswand mit dem Gehäuseteil verbunden ist. Die Verbindungswand verleiht dem Anschlussformstück zusätzliche Stabilität. Ferner kann sie eine isolierende Funktion haben, was insbesondere bei Warmwasserleitungen von Vorteil ist. Bei einer Wand, welche dem Gehäuseteil und dem Bypasskanal gemeinsam ist, liegt der Bypasskanal zumindest abschnittweise am Gehäuseteil an, was eine sehr kompakte bzw. platzsparende Bauweise erlaubt. Ferner kann bei dieser Variante mit einer gemeinsamen Gehäuseteil- und Bypasswand Material für Stege oder eine Verbindungswand bzw. einen Zwischenboden eingespart werden.

Eine Umleitung des Wassers via Bypasskanal ausgehend vom Wasserauslass am Gehäuseteil vorbei in Richtung des Einlassanschlusses hat den Vorteil, dass unterhalb, also auslassseitig des Gehäuseteils wenig Platz beansprucht wird, wodurch platztechnische Unterbauprobleme vermieden werden können. Insbesondere ist es möglich, den Abflusskanal stromabwärts der Bypasskanal-Abzweigung zu verschliessen und so sämtliches Wasser via Bypasskanal um den Gehäuseteil herum zu leiten. Darauf wird weiter unten noch im Detail eingegangen werden.

Das Anschlussformstück ist derart ausgestaltet, dass der Zuflusskanal und bevorzugt auch der Abflusskanal jeweils einen geradlinigen, eine jeweilige Längsachse definierenden Abschnitt aufweisen und die Zuflusskanal-Längsachse und die Abflusskanal-Längsachse bevorzugt zumindest annähernd miteinander fluchten oder parallel zueinander verlaufen. Mit anderen Worten: die Zuflusskanal-Längsachse des mindestens einen geradlinigen Abschnitts des Zuflusskanals und die Abflusskanal-Längsachse des mindestens einen geradlinigen Abschnitts des Abflusskanals fluchten entweder miteinander oder sind wenigstens annähernd parallel zueinander verlaufend angeordnet. Dies erlaubt insgesamt eine stabile und materialsparende Herstellung des Anschlussformstücks. Bei miteinander fluchtenden Längsachsen haben die geradlinigen Kanalabschnitte des Zuflusskanals und des Abflusskanals somit eine gemeinsame Längsachse, wobei der Abflusskanal in Richtung der gemeinsamen Längsachse gesehen dem Zuflusskanal nachgeordnet ist. Bei einer zueinander parallelen Anordnung können die geradlinigen Kanalabschnitte bzw. ihre Längsachsen beispielsweise in Tiefenrichtung (Richtung Frontseite-Rückseite) gegenüber der Frontalebene (d.h. in der x-y-Ebene, wenn die z-Achse in Tiefenrichtung verläuft) versetzt zueinander angeordnet sein. Auch bei zueinander parallelen Anordnung der Kanalabschnitte ist der Abflusskanal dem Zuflusskanal in Flussrichtung gesehen bevorzugt nachgeordnet.

Bevorzugt sind der Zuflusskanal und der Abflusskanal über ihre gesamte Länge wenigstens annähernd geradlinig ausgebildet.

Erfindungsgemäss weist der Bypasskanal einen geradlinigen, eine Bypasskanal-Längsachse definierenden Abschnitt auf und die Längsachsen des Zuflusskanals und des Bypasskanals verlaufen wenigstens annähernd parallel zueinander. Besonders bevorzugt sind die geradlinigen Abschnitte des Zuflusskanals und des Bypasskanals nebeneinander angeordnet. Nebeneinander kann etwa bedeuten, dass die geradlinigen Abschnitte des Zuflusskanals und des Bypasskanals im Wesentlichen parallel und lediglich in geringfügigem Abstand zueinander angeordnet sind. Besagte Abschnitte können selbsttragend oder über eine Verbindungswand miteinander verbunden ausgebildet sein. Alternativ ist es auch möglich, dass eine gemeinsame Wand den geradlinigen Abschnitt des Zuflusskanals und jenen des Bypasskanals begrenzt. Dies erlaubt eine kompakte Bauweise des Anschlussformstücks.

Gemäss einer bevorzugten Ausführungsform sind die in den zwei vorherigen Abschnitten erwähnten Längsachsen, d.h. die Zuflusskanal-Längsachse, die Abflusskanal-Längsachse und die Bypasskanal-Längsachse, wenigstens annähernd in einer gemeinsamen Ebene verlaufend angeordnet sind. Bei dieser Ausführungsform weisen somit der Zuflusskanal, der Abflusskanal und der Bypasskanal einen geradlinigen Abschnitt auf, die jeweils eine Längsachse definieren und besagte Längsachsen in einer gemeinsamen Ebene angeordnet sind. Besonders bevorzugt sind die Längsachsen in der Frontalebene angeordnet, d.h. in der x-y-Ebene, wenn die z-Achse von der Rückseite zur Frontseite verläuft. So wird insbesondere in Tiefenrichtung, d.h. in Richtung Frontseite-Rückseite wenig Raum beansprucht, was insbesondere bei Vorwandinstallationen von Vorteil ist.

Gemäss einer bevorzugten Ausführungsform ist im Zuflusskanal zwischen dem Einlassanschluss und der Wassereinlassöffnung des Gehäuseteils eine einlassseitige Ventilaufnahme für ein Absperrventil ausgebildet. In diese Absperrventilaufnahme kann ein Absperrventil eingesetzt werden, das den Fluss des Wassers zum Wasserzähler bzw. vom Einlassanschluss zur Wassereinlassöffnung des Wasserzählers komplett unterbricht. Die Ventilaufnahme ist bevorzugt zur Frontseite hin offen, was das Einsetzen und Betätigen des Absperrventils erleichtert.

Wie oben erwähnt, verläuft der Bypasskanal in Richtung zur Einlassseite hin am Gehäuseteil vorbei, so dass der zweite Auslassanschluss einlassseitig des Gehäuseteils angeordnet ist. Vorzugsweise befindet sich der zweite Auslassanschluss benachbart zur einlassseitigen Absperrventilaufnahme. Besonders bevorzugt sind die einlassseitige Absperrventilaufnahme und der zweite Auslassanschluss auf einer Geraden angeordnet, welche rechtwinklig zur Flussrichtung verläuft. Im montierten Zustand des Anschlussformstücks verläuft die Flussrichtung des Wassers in der Regel vertikal, so dass in diesem Falle die Absperrventilaufnahme und der zweite Auslassanschluss bevorzugt auf einer gemeinsamen horizontalen Gerade nebeneinander angeordnet sind.

Der auslassseitig des Gehäuseteils angeordnete erste Auslassanschluss ist bevorzugt mittels eines Absperrorgans, vorzugsweise eines (Blind-)Stopfens, verschliessbar. In dieser Ausführungsform fliesst bei geschlossenem Absperrorgan sämtliches durch die Wasserauslassöffnung des Gehäuseteils austretendes Wasser durch den Bypasskanal. So kann der Platzbedarf des Anschlussformstücks auslassseitig des Gehäuseteils stark reduziert werden, was bei beengten Platzverhältnissen, etwa bei einem Waschtischunterbau besonders vorteilhaft ist. Je nach Bedarf kann natürlich auch der zweite Auslassanschluss mittels eines Absperrorgans verschlossen und lediglich der erste Auslassanschluss genutzt werden.

Das Anschlussformstück umfasst ferner bevorzugt ein flächiges Befestigungselement, welches Montageöffnungen zur rückseitigen Befestigung des Anschlussformstücks an einer Gebäudewand aufweist. Das Befestigungselement kann etwa als Montageplatte ausgebildet sein. Ferner ist es bevorzugt benachbart zum Einlassanschluss angeordnet und vorzugsweise integral mit dem Bauteil (d.h. mindestens gebildet durch den Zuflusskanal, Abflusskanal, Gehäuseteil und Bypasskanal) ausgebildet. Das flächige Befestigungselement kann etwa als Flansch oder als Teil eines Montagekastens (oder Montagerahmens) ausgebildet sein. Durch Hindurchführen entsprechender Befestigungsschrauben durch die Montageöffnungen kann das Anschlussformstück dann beispielsweise an in der Gebäudewand eingelassenen Dübeln befestigt werden.

Als weiteres Element kann das Anschlussformstück ausserdem einen dem zweiten Auslassanschluss zugeordneten Anschlussstutzen umfassen, wobei besagter Anschlussstutzen vorzugsweise zur Frontseite hin verläuft. Der Anschlussstutzen ist dabei bevorzugt so dimensioniert, dass er nach Installation des Anschlussformstücks bündig mit der Vorwand abschliesst und mit einem in eine das Anschlussformstück abdeckenden Rosette integrierten Ventil, insbesondere einem Eckventil, verbunden werden kann.

Die vorliegende Erfindung betrifft neben dem oben beschriebenen Anschlussformstück ferner eine Anschlussvorrichtung, welche solch ein Anschlussformstück sowie eine zweiteilig ausgebildete, das Anschlussformstück abdeckende Rosette umfasst.

Bevorzugt umfasst die Anschlussvorrichtung nicht nur eine sondern zwei Anschlussformstücke, die spiegelsymmetrisch ausgebildet und spiegelsymmetrisch angeordnet sind und mittels einer gemeinsamen, bevorzugt zweiteiligen Rosette abgedeckt werden können. In der Regel wird hierbei ein Anschlussformstück an eine Warmwasserleitung und das andere Anschlussformstück an eine Kaltwasserleitung angeschlossen. Die beiden Anschlussformstücke können ferner miteinander verbunden sein und somit eine Installationseinheit bilden, die als Ganzes unter dem Putz montiert werden kann.

Das Anschlussformstück bzw. die zwei Anschlussformstücke sind bevorzugt in einem Montagekasten aufgenommen, welcher frontseitig von der erwähnten zweiteiligen Rosette abdeckbar ist. Die Rosette bildet in diesem Fall bevorzugt den Deckel des Montagekastens, welcher das zumindest eine Anschlussformstück umgibt. Der Montagekasten schützt damit das Anschlussformstück vor Verschmutzung. Zur Befestigung des Anschlussformstücks kann dieses - wie oben erwähnt - ein flächiges Befestigungselement aufweisen, das im Falle eines Montagekastens beispielsweise einen Teil der Kastenrückwand, bildet. Unten- und obenseitig weist der Kasten vorzugsweise Ausnehmungen auf, durch welche die Ein- und Auslassanschlüsse des Anschlussformstücks herausragen. So kann der Montagekasten inkl. Anschlussformstück(e) als Ganzes vor einer Gebäudewand montiert und mit den zu- und abführenden Wasserleitungen angeschlossen werden, was eine besonders einfache Montage erlaubt. Anschliessend kann der Montagekasten mittels Rosette abgedeckt werden. Für Reparatur- oder Wartungsarbeiten kann die Rosette vom Kasten entfernt und das darunterliegende Anschlussformstück inkl. Wasserzähler somit einfach zugänglich gemacht werden, ohne den Verputz bzw. die geflieste Wand zu beschädigen. Anstelle eines Montagekastens ist auch die Verwendung eines Montagerahmens denkbar.

Weitere Einzelheiten der Erfindung werden anhand der Zeichnungen beschrieben.

Es zeigen:
- Fig. 1: eine Frontalansicht auf ein Anschlussformstück gemäss einer ersten Ausführungsform;
- Fig. 2: in Rückansicht einen Längsschnitt durch das Anschlussformstück aus Fig. 1;
- Fig. 3: in Draufsicht von oben das in Fig. 1 gezeigte Anschlussformstück mit einer Montageplatte und einem am Bypasskanal angeschlossenen Anschlussstutzen;
- Fig. 4: in Sicht von unten das in Fig. 1 gezeigte Anschlussformstück;
- Fig. 5: in Seitenansicht das in Fig. 1 gezeigte Anschlussformstück;
- Fig. 6: in Rückansicht einen Längsschnitt durch eine zweite Ausführungsform eines Anschlussformstücks mit einem verzweigten Abflusskanal;
- Fig. 7: in Rückansicht einen Längsschnitt durch eine dritte Ausführungsform eines Anschlussformstücks mit einem verlängerten und verzweigten Abflusskanal;
- Fig. 8: in Rückansicht einen Längsschnitt durch eine vierte Ausführungsform eines Anschlussformstücks mit selbsttragendem Bypasskanal; und
- Fig. 9: das in Fig. 8 gezeigte Anschlussformstück in Draufsicht von oben.

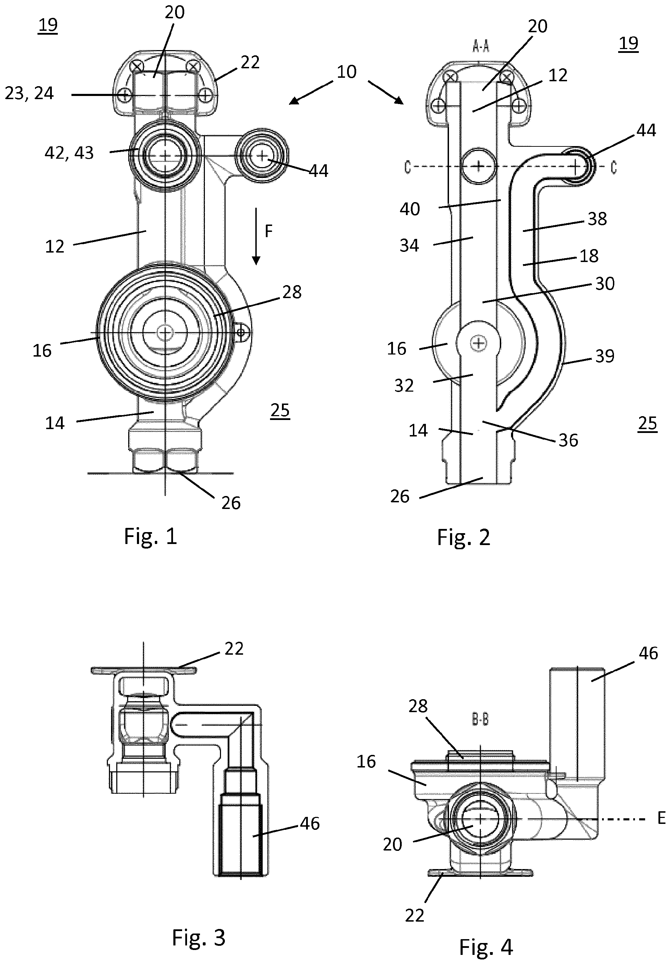

Das in den Figuren 1 bis 9 gezeigte Anschlussformstück 10 ist als integrales, einstückig aus Rotguss gegossenes Bauteil ausgebildet und umfasst mitunter einen Zuflusskanal 12, einen Abflusskanal 14, einen Gehäuseteil 16 sowie einen Bypasskanal 18.

Kalt- und/oder Warmwasser wird durch einen eine Einlassseite 19 definierenden Einlassanschluss 20 in den Zuflusskanal 12 geleitet, wobei der Einlassanschluss 20 für die Wasserzufuhr mit dem freien Ende einer Wasserzufuhrleitung (nicht gezeigt) verbunden ist, etwa mittels Verschrauben. Der Zuflusskanal 12 definiert dabei eine Flussrichtung F für das zugeleitete Wasser. Auf der Höhe des, bzw. benachbart zum Einlassanschluss (es) 20 ist das Anschlussformstück 10 integral mit einer Montageplatte 22 verbunden, die Ausnehmungen bzw. Montageöffnungen 23 aufweist, welche eine Befestigung des Anschlussformstücks 10 mittels Befestigungsschrauben 24 an einer nicht gezeigten Gebäudewand ermöglichen.

Der Zuflusskanal 12 ist in der gezeigten Ausführungsform aus einem geradlinigen, zylindrischen Rohr gebildet und somit durch die Wand des Rohrs begrenzt. Der Zuflusskanal 12 ist ferner einlassseitig des Gehäuseteils 16 angeordnet. Analog dazu ist auslassseitig des Gehäuseteils 16 ein Abflusskanal 14 angeordnet, welcher eine Auslassseite 25 definiert und einen ersten Auslassanschluss 26 aufweist, durch welchen Wasser abführbar ist. Die Einlassseite 19 und die Auslassseite 25 sind somit auf gegenüberliegenden Seiten des Formstücks 10 angeordnet. Damit ist der Abflusskanal 14 in Flussrichtung F gesehen dem Zuflusskanal 12 nachgeordnet.

Der Gehäuseteil 16 dient der Aufnahme einer Messvorrichtung, insbesondere eines Wasserzählers 28 (auch Wasseruhr genannt). Der Messeinsatz des Wasserzählers 28, welcher in den Gehäuseteil 16 eingesetzt werden kann, ist hier nicht dargestellt. Solche Wasserzähler 28 sind dem Fachmann wohlbekannt.

Das Anschlussformstück 10 wird in der Regel derart in ein Wasserleitungssystem angeschlossen, dass das Wasser in einer vertikalen Flussrichtung F stromabwärts, d.h. von oben (einlassseitig) nach unten (auslassseitig), durch den Wasserzähler 28 fliesst. Konkret wird das Wasser in diesem Falle durch den Einlassanschluss 20 via Zuflusskanal 12 in Flussrichtung F zum Gehäuseteil 16 und durch dessen Wassereinlassöffnung 30 in den Gehäuseteil 16 hinein geleitet. Das Wasser strömt daraufhin durch den Wasserzähler 28 und wird anschliessend über die Wasserauslassöffnung 32 wieder aus dem Gehäuseteil 16 geleitet. Das vom Wasserzähler 28 bzw. dem Gehäuseteil 16 austretende Wasser kann daraufhin über zwei Wege weitergeleitet werden, nämlich durch den Abflusskanal 14 und/oder den Bypasskanal 18.

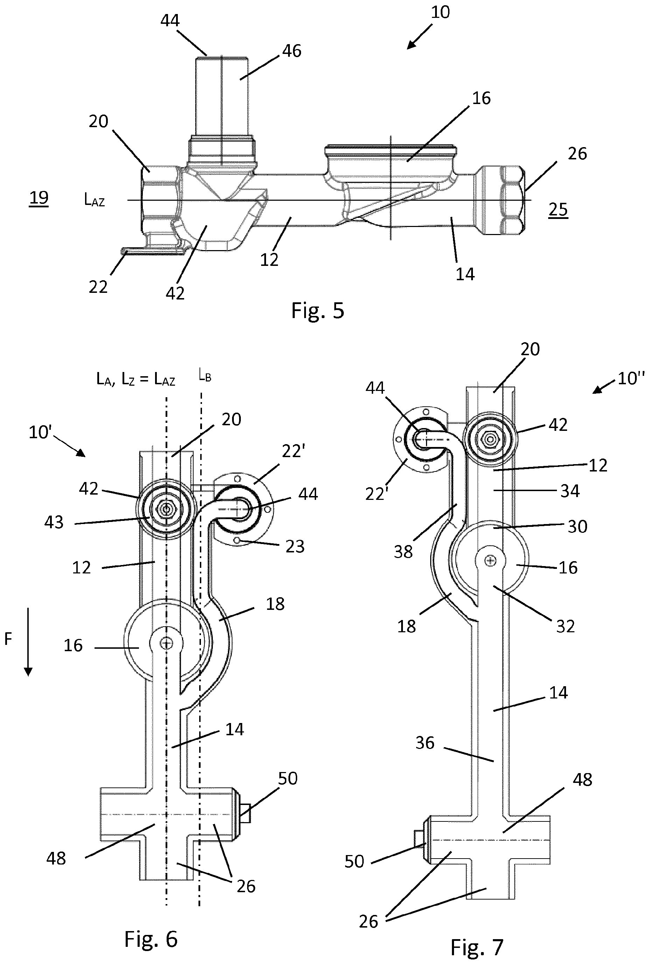

Wie aus Fig. 2 gut ersichtlich verläuft der Zuflusskanal 12 entlang einer Zuflusskanal-Längsachse Lz, die durch einen geradlinigen Kanalabschnitt 34 des Zuflusskanals 12 definiert ist. Der Abflusskanal 14 verläuft analog dazu entlang eines geradlinigen Kanalabschnitts 36, welcher eine Abflusskanal-Längsachse L_{A} definiert. Der geradlinige Abschnitt 34 des Zuflusskanals verläuft in einer Linie mit dem geradlinigen Abschnitt 36 des Abflusskanals 14, d.h. die Längsachse Lz des Zuflusskanals 12 fluchtet mit der Längsachse L_{A} des Abflusskanals 14 und bildet so eine gemeinsame Längsachse L_{AZ} (siehe auch Fig. 5). Der Bypasskanal 18 zweigt zwischen der Wasserauslassöffnung 32 und dem ersten Auslassanschluss 26 vom Abflusskanal 14 ab und verläuft zunächst in Richtung Einlassseite 19 um den Gehäuseteil 16 herum und erstreckt sich anschliessend über einen geradlinigen Kanalabschnitt 38, welcher parallel zum geradlinigen Abschnitt 34 des Zuflusskanals 12 verläuft. Wie in Fig. 1 und 2 ersichtlich ist der Bypasskanal 18 integral am Gehäuseteil 16 angeformt und der geradlinige Kanalabschnitt 38 des Bypasskanals ist über eine Verbindungswand 40 mit dem geradlinigen Kanalabschnitt 34 des Zuflusskanals 12 verbunden.

Zwischen dem Einlassanschluss 20 und dem Gehäuseteil 16 ist im Zuflusskanal 12 eine Ventilaufnahme 42 für ein Absperrventil 43 angeordnet. Das Absperrventil 43 kann eine Offenstellung, in welcher es von Wasser durchströmbar ist, und eine Geschlossenstellung, in welcher das Durchströmen von Wasser verunmöglicht wird, einnehmen. Durch das Absperrventil 43 kann im Wartungsfall sichergestellt werden, dass der Wasserzählereinsatz 28 wasserlos ist und somit aus dem Gehäuseteil 16 entfernbar ist.

Der Bypasskanal 18 ist einlassseitig mit einem zweiten Wasserauslass 44 verbunden, wobei letzterer benachbart zum Absperrventil 43 angeordnet ist. "Benachbart" bedeutet in diesem Falle konkret, dass das Absperrventil 43 und der zweite Wasserauslass 44 in einer gemeinsamen Ebene angeordnet sind, welche senkrecht zur gemeinsamen Längsachse L_{AZ} des Zu- und Abflusskanals 14, 16 verläuft. Diese Ebene ist in Fig. 2 als C-C-Ebene angezeigt.

Der Zuflusskanal 12, Abflusskanal 14 und der Bypasskanal 18 befinden sich ebenfalls in einer gemeinsamen Ebene E, die sich in der Regel im Abstand zu einer nicht gezeigten Gebäudewand befindet und sich parallel zu dieser erstreckt. Die Montageplatte 22 befindet sich, wie in Fig. 3 und 5 ersichtlich, hinter dieser Ebene E.

Wie in den Fig. 3 und 4 gut ersichtlich ist der zweite Wasserauslass 44 mit einem Anschlussstutzen 46 verbunden, dessen Längsachse rechtwinklig zur gemeinsamen Längsachse L_{AZ} des Zu- und Abflusskanals 12, 14 verläuft. Im installierten Zustand ist das Anschlussformstück 10 in der Regel hinter einer in den Figuren nicht gezeigten Abdeckung, z.B. einer Rosette, angeordnet und von aussen nicht sichtbar. Der Anschlussstutzen 46 kann hingegen frontseitig durch die Abdeckung herausragen und beispielsweise mit einem Wasserhahn verbunden sein.

In den Fig. 6 und 7 sind zwei alternative Ausführungsformen des Anschlussformstücks 10 gezeigt, die sich von der in Fig. 1-5 dargestellten ersten Ausführungsform insbesondere in der Konfiguration des Abflusskanals 14 und des zweiten Wasserauslasses 44 unterscheidet. Der Bypasskanal 18 zweigt wie auch bei der ersten Ausführungsform auslassseitig des Gehäuseteils 16 vom Abflusskanal 14 ab und verläuft um den Gehäuseteil 16 herum in Richtung Einlassseite 19. Nachfolgend (d.h. in vertikaler Flussrichtung F stromabwärts) an die Abzweigung des Bypasskanals 18 umfasst der Abflusskanal 14 ein Verzweigungsstück 48, das die Weiterleitung des Wassers in drei Richtungen ermöglicht. Wie anhand der Fig. 6 und 7 gezeigt, kann der geradlinige Kanalabschnitt 36 des Abflusskanals 14 zwischen der Abzweigung des Bypasskanals 18 und des Verzweigungsstücks 48 länger oder kürzer ausgebildet sein. Das Verzweigungsstück 48 ermöglicht eine freie Wahl der Richtung der Wasserweiterleitung. Nicht benötigte weiterführende Kanalleitungen können beispielsweise mittels eines Blindstopfens 50 und/oder eines Rückschlagventils verschlossen werden, so dass ein Wasseraustritt vermieden wird.

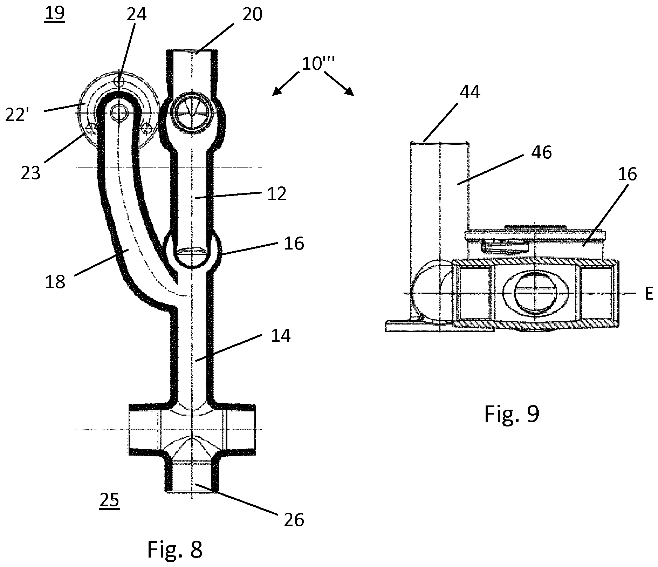

In Fig. 8 ist eine weitere Variante des Anschlussformstücks 10 gezeigt, bei welcher der Bypasskanal 18 selbsttragend ausgebildet ist. In diesem Falle sind der Zuflusskanal 12 und der Bypasskanal 18 insofern nicht über eine Verbindungswand 40 verbunden, wodurch bei der Herstellung Material eingespart werden kann.

Im Gegensatz zu der in Fig. 1 bis 5 gezeigten Ausführungsform befindet sich die Montageplatte 22' in den in Fig. 6 bis 9 gezeigten Varianten neben, bzw. auf der Höhe des zweiten Wasserauslasses 44.

## Patentansprüche

1. Anschlussformstück (10) für eine Vorwandmontage, aufweisend
einen eine Einlassseite (19) des Anschlussformstücks definierenden Einlassanschluss (20), durch welchen Wasser einem eine Flussrichtung (F) definierenden Zuflusskanal (12) zuführbar ist,
einen in Flussrichtung (F) gesehen dem Zuflusskanal (12) nachgeordneten Abflusskanal (14) mit einem eine Auslassseite (25) des Anschlussformstücks definierenden ersten Auslassanschluss (26), durch welchen Wasser abführbar ist, und
einen eine Frontseite (15) und eine Rückseite (17) definierenden Gehäuseteil (16) zur Aufnahme eines Wasserzählers (28), wobei der Gehäuseteil (16) einlassseitig über eine Wassereinlassöffnung (30) mit dem Zuflusskanal (12) und auslassseitig über eine Wasserauslassöffnung (32) mit dem Abflusskanal (14) verbunden ist, und
einerseits mit einem zweiten Auslassanschluss (44) und andererseits mit der Wasserauslassöffnung (32) des Gehäuseteils (16) verbundenen Bypasskanal (18),
wobei zumindest der Zuflusskanal (12), der Abflusskanal (14), der Gehäuseteil (16) sowie der Bypasskanal (18) als einstückiges, integrales Bauteil ausgebildet sind, **dadurch gekennzeichnet, dass** der Bypasskanal (18) am Gehäuseteil (16) vorbei verläuft, so dass der zweite Auslassanschluss (44) einlassseitig des Gehäuseteils (16) angeordnet ist,
**dass** eine den Bypasskanal (18) begrenzende Kanalwand (39) entweder zumindest abschnittweise mit dem Gehäuseteil (16) gemeinsam ist oder über eine Verbindungswand (40) mit dem Gehäuseteil (16) verbunden ist, und
dass der Zuflusskanal (12) einen geradlinigen, eine Längsachse (L_{Z}) definierenden Kanalabschnitt (34) aufweist, der Bypasskanal (18) einen geradlinigen, eine Bypasskanal-Längsachse (L_{B}) definierenden Abschnitt (38) aufweist und die Längsachsen (Lz, L_{B}) des Zuflusskanals (12) und des Bypasskanals (18) wenigstens annähernd parallel zueinander verlaufen.

2. Anschlussformstück (10) gemäss Anspruch 1, **dadurch gekennzeichnet, dass** das Bauteil formstabil und im Form- oder Spritzguss, bevorzugt aus Rotguss oder alternativ aus einem Kunststoffmaterial, hergestellt ist.

3. Anschlussformstück (10) gemäss Anspruch 1 oder 2, **dadurch gekennzeichnet, dass** der Bypasskanal (18) vom Abflusskanal (14) abzweigt.

4. Anschlussformstück (10) gemäss einem der Ansprüche 1 bis 3, **dadurch gekennzeichnet, dass** der Bypasskanal (18) selbsttragend ausgebildet ist.

5. Anschlussformstück (10) gemäss einem der Ansprüche 1 bis 4, **dadurch gekennzeichnet, dass** der Abflusskanal (14) einen geradlinigen, eine Längsachse (L_{A}) definierenden Kanalabschnitt (36) aufweist und die Zuflusskanal-Längsachse (L_{Z}) und die Abflusskanal-Längsachse (L_{A}) zumindest annähernd miteinander fluchten oder parallel zueinander verlaufen.

6. Anschlussformstück (10) gemäss Anspruch 5, **dadurch gekennzeichnet, dass** die Längsachsen (Lz, L_{A}, L_{B}) des Zuflusskanals (12), des Abflusskanals (14) und des Bypasskanals (18) wenigstens annähernd in einer gemeinsamen Ebene (E) verlaufend angeordnet sind.

7. Anschlussformstück (10) gemäss einem der Ansprüche 1 bis 6, **dadurch gekennzeichnet, dass** im Zuflusskanal (12) zwischen dem Einlassanschluss (20) und der Wassereinlassöffnung (30) des Gehäuseteils (16) eine einlassseitige Ventilaufnahme (42) für ein Absperrventil (43) ausgebildet ist.

8. Anschlussformstück (10) gemäss Anspruch 1 und 7, **dadurch gekennzeichnet, dass** der zweite Auslassanschluss (44) und die einlassseitige Absperrventilaufnahme (42) nebeneinander angeordnet sind.

9. Anschlussformstück (10) gemäss einem der Ansprüche 1 bis 8, **dadurch gekennzeichnet, dass** der erste Auslassanschluss (26) mittels eines Absperrorgans, bevorzugt eines Stopfens (50), verschliessbar ist und bei geschlossenem Absperrorgan sämtliches durch die Auslassöffnung (32) des Gehäuseteils (16) fliessendes Wasser durch den Bypasskanal (18) geleitet wird.

10. Anschlussformstück (10) gemäss einem der Ansprüche 1 bis 9, **gekennzeichnet durch** ein flächiges Befestigungselement, vorzugsweise eine Montageplatte (22), mit Montageöffnungen (23) zur rückseitigen Befestigung des Formstücks (10) an einer Gebäudewand, wobei das Befestigungselement (22) bevorzugt benachbart zum Einlassanschluss (20) angeordnet ist und vorzugsweise integral mit dem Bauteil ausgebildet ist.

11. Anschlussformstück (10) gemäss einem der Ansprüche 1 bis 10, **dadurch gekennzeichnet, dass** der zweite Auslassanschluss (44) einen Anschlussstutzen (46) umfasst, welcher zur Frontseite hin verläuft.

12. Anschlussvorrichtung umfassend mindestens ein Anschlussformstück (10) gemäss einem der Ansprüche 1 bis 11 sowie eine zweiteilig ausgebildete, das Anschlussformstück (10) abdeckende Rosette.

13. Anschlussvorrichtung gemäss Anspruch 12, **gekennzeichnet durch** zwei spiegelsymmetrisch ausgebildete und spiegelsymmetrisch angeordnete Anschlussformstücke (10) sowie eine gemeinsame, zweiteilige Rosette.

## Claims

1. Moulded connection piece (10) for installation in front of a wall, having
an inlet connection (20) which defines an inlet side (19) of the moulded connection piece and through which water is able to be fed to an inflow channel (12) defining a flow direction (F),
an outflow channel (14) which is arranged downstream of the inflow channel (12) as seen in the flow direction (F) and which has a first outlet connection (26) defining an outlet side (25) of the moulded connection piece, through which first outlet connection water is able to be discharged, and
a housing part (16) which defines a front side (15) and a rear side (17) and which serves for accommodating a water meter (28), wherein the housing part (16) is connected at the inlet side to the inflow channel (12) via a water inlet opening (30) and at the outflow side to the outflow channel (14) via a water outlet opening (32), and
a bypass channel (18) which is connected at one side to a second outlet connection (44) and at the other side to the water outlet opening (32) of the housing part (16),
wherein at least the inflow channel (12), the outflow channel (14), the housing part (16) and the bypass channel (18) are formed as a one-piece integral component,
**characterized in that** the bypass channel (18) runs past the housing part (16) such that the second outlet connection (44) is arranged at the inlet side of the housing part (16),
**in that** a channel wall (39) delimiting the bypass channel (18) is either shared at least sectionally with the housing part (16) or is connected to the housing part (16) via a connecting wall (40), and
**in that** the inflow channel (12) has a rectilinear channel portion (34) defining a longitudinal axis (L_{Z}), the bypass channel (18) has a rectilinear portion (38) defining a bypass longitudinal axis (L_{B}), and the longitudinal axes (L_{Z}, L_{B}) of the inflow channel (12) and the bypass channel (18) run at least approximately parallel to one another.

2. Moulded connection piece (10) according to Claim 1, **characterized in that** the component is dimensionally stable and is produced by mould casting or injection moulding, preferably from red brass or alternatively from a plastic material.

3. Moulded connection piece (10) according to Claim 1 or 2, **characterized in that** the bypass channel (18) branches off from the outflow channel (14).

4. Moulded connection piece (10) according to one of Claims 1 to 3, **characterized in that** the bypass channel (18) is of self-supporting form.

5. Moulded connection piece (10) according to one of Claims 1 to 4, **characterized in that** the outflow channel (14) has a rectilinear channel portion (36) defining a longitudinal axis (L_{A}), and the inflow channel longitudinal axis (L_{Z}) and the outflow channel longitudinal axis (L_{A}), at least approximately, are in line with one another or run parallel to one another.

6. Moulded connection piece (10) according to Claim 5, **characterized in that** the longitudinal axes (L_{Z}, L_{A}, L_{B}) of the inflow channel (12), the outflow channel (14) and the bypass channel (18) are arranged so as to run at least approximately in a common plane (E).

7. Moulded connection piece (10) according to one of Claims 1 to 6, **characterized in that** an inlet-side valve receptacle (42) for a shut-off valve (43) is formed in the inflow channel (12) between the inlet connection (20) and the water inlet opening (30) of the housing part (16) .

8. Moulded connection piece (10) according to Claim 1 and 7, **characterized in that** the second outlet connection (44) and the inlet-side shut-off valve receptacle (42) are arranged next to one another.

9. Moulded connection piece (10) according to one of Claims 1 to 8, **characterized in that** the first outlet connection (26) is able to be closed off by means of a shut-off element, preferably a plug (50), and, when the shut-off element is closed, all the water flowing through the outlet opening (32) of the housing part (16) is conducted through the bypass channel (18).

10. Moulded connection piece (10) according to one of Claims 1 to 9, **characterized by** an areal fastening element, preferably an installation plate (22), having installation openings (23) for rear-side fastening of the moulded piece (10) to a building wall, wherein the fastening element (22) is preferably arranged adjacent to the inlet connection (20) and is preferably formed integrally with the component.

11. Moulded connection piece (10) according to one of Claims 1 to 10, **characterized in that** the second outlet connection (44) comprises a connection fitting (46) which runs towards the front side.

12. Connection apparatus comprising at least one moulded connection piece (10) according to one of Claims 1 to 11 and a rosette of two-part form that covers the moulded connection piece (10).

13. Connection apparatus according to Claim 12, **characterized by** two moulded connection pieces (10) of mirror-symmetrical form that are arranged in a mirror-symmetrical manner and a common two-part rosette.

## Revendications

1. Pièce de raccordement moulée (10) destinée au montage mural et comportant
un raccord d'entrée (20) qui définit un côté entrée (19) de la pièce de raccordement moulée et qui permet d'amener de l'eau à un conduit d'amenée (12) définissant une direction d'écoulement (F),
un conduit d'évacuation (14) disposé en aval du conduit d'amenée (12) par référence au sens d'écoulement (F) et comprenant un premier raccord de sortie (26) qui définit un côté sortie (25) de la pièce de raccordement moulée et qui permet d'évacuer l'eau, et
une partie formant boîtier (16) qui définit un côté avant (15) et un côté arrière (17) et qui est destinée à recevoir un compteur d'eau (28), la partie formant boîtier (16) étant reliée du côté entrée, par le biais d'une ouverture d'entrée d'eau (30), au conduit d'amenée (12) et du côté sortie, par le biais d'une ouverture de sortie d'eau (32), au conduit d'évacuation (14), et
un conduit de dérivation (18) relié d'une part à un deuxième raccord de sortie (44) et d'autre part à l'ouverture de sortie d'eau (32) de la partie formant boîtier (16),
au moins le conduit d'amenée (12), le conduit d'évacuation (14), la partie formant boîtier (16) et le conduit de dérivation (18) étant conçus comme un composant monobloc et intégral, **caractérisée en ce que** le conduit de dérivation (18) passe devant la partie formant boîtier (16) de sorte que le deuxième raccord de sortie (44) est disposé du côté entrée de la partie formant boîtier (16),
une paroi de conduit (39) délimitant le conduit de dérivation (18) est commune au moins par endroits avec la partie formant boîtier (16) ou est reliée à la partie formant boîtier (16) par le biais d'une paroi de liaison (40), et
le conduit d'amenée (12) comporte une portion de conduit rectiligne (34) définissant un axe longitudinal (L_{Z}), le conduit de dérivation (18) comporte une portion rectiligne (38) définissant un axe longitudinal de conduit de dérivation (L_{B}) et les axes longitudinaux (L_{Z}, L_{B}) du conduit d'amenée (12) et du conduit de dérivation (18) s'étendent au moins approximativement parallèlement l'un à l'autre.

2. Pièce de raccordement moulée (10) selon la revendication 1, **caractérisée en ce que** le composant est dimensionnellement stable et réalisé par coulage ou moulage par injection, de préférence en bronze ou en variante en matière synthétique.

3. Pièce de raccordement moulée (10) selon la revendication 1 ou 2, **caractérisée en ce que** le conduit de dérivation (18) est une bifurcation du conduit d'évacuation (14).

4. Pièce de raccordement moulée (10) selon l'une des revendications 1 à 3, **caractérisée en ce que** le conduit de dérivation (18) est conçu pour être autoportant.

5. Pièce de raccordement moulée (10) selon l'une des revendications 1 à 4, **caractérisée en ce que** le conduit d'évacuation (14) comporte une portion de conduit rectiligne (36) définissant un axe longitudinal (L_{A}) et l'axe longitudinal (L_{Z}) du conduit d'amenée et l'axe longitudinal (L_{A}) du conduit d'évacuation sont au moins approximativement alignés l'un avec l'autre ou parallèles l'un à l'autre.

6. Pièce de raccordement moulée (10) selon la revendication 5, **caractérisée en ce que** les axes longitudinaux (L_{Z}, L_{A}, L_{B}) du conduit d'amenée (12), du conduit d'évacuation (14) et du conduit de dérivation (18) sont disposés de manière à s'étendre au moins approximativement dans un plan commun (E).

7. Pièce de raccordement moulée (10) selon l'une des revendications 1 à 6, **caractérisée en ce qu'**un logement de vanne côté entrée (42) destiné à une vanne d'arrêt (43) est prévu dans le conduit d'amenée (12) entre le raccord d'entrée (20) et l'ouverture d'entrée d'eau (30) de la partie formant boîtier (16).

8. Pièce de raccordement moulée (10) selon les revendications 1 et 7, **caractérisée en ce que** le deuxième raccord de sortie (44) et le logement de vanne d'arrêt côté entrée (42) sont disposés côte à côte.

9. Pièce de raccordement moulée (10) selon l'une des revendications 1 à 8, **caractérisée en ce que** le premier raccord de sortie (26) peut être fermé au moyen d'un élément d'obturation, de préférence un bouchon (50), et, lorsque l'élément d'obturation est fermé, toute l'eau qui s'écoule par l'ouverture de sortie (32) de la partie formant boîtier (16) est dirigée à travers le conduit de dérivation (18).

10. Pièce de raccordement moulée (10) selon l'une des revendications 1 à 9, **caractérisée par** un élément de fixation sensiblement bidimensionnel, de préférence une plaque de montage (22), qui comprend des ouvertures de montage (23) destinées à la fixation arrière de la pièce moulée (10) à une paroi de bâtiment, l'élément de fixation (22) étant disposé de préférence de manière adjacente au raccord d'entrée (20) et étant de préférence formé de manière intégrée au composant.

11. Pièce de raccordement moulée (10) selon l'une des revendications 1 à 10, **caractérisée en ce que** le deuxième raccord de sortie (44) comprend une tubulure de raccord (46) qui s'étend vers le côté avant.

12. Dispositif de raccordement comprenant au moins une pièce de raccordement moulée (10) selon l'une des revendications 1 à 11 et une rosace en deux parties qui recouvre la pièce de raccordement moulée (10).

13. Dispositif de raccordement selon la revendication 12, **caractérisé par** deux pièces de raccordement moulées (10), qui présentent une symétrie spéculaire et qui sont disposées suivant une symétrie spéculaire, ainsi que par une rosace commune en deux parties.
